# FASCICULE DE BREVET EUROPEEN

(11) **EP 2 768 869 B1**
(45) Date de publication et mention de la délivrance du brevet: **30.12.2015**
(21) Numéro de dépôt: 12772949.9
(22) Date de dépôt: 16.10.2012
(51) Int. Cl.: C08F 4/48, C08G 81/02, C08F 36/04, C08C 19/44

(54) **NOUVEL AMORCEUR DE POLYMÉRISATION ANIONIQUE, SON UTILISATION POUR LA SYNTHESE D'UN ELASTOMERE DIENIQUE PORTANT EN EXTREMITE DE CHAINE UNE FONCTION ALCYNE ET ELASTOMERE DIENIQUE FONCTIONNALISE**
NEUER ANIONISCHER POLYMERISIERUNGSINITIATOR, VERWENDUNG DAVON ZUR HERSTELLUNG EINES DIENELASTOMERS MIT EINER ALKYNFUNKTION AM KETTENENDE UND FUNKTIONALISIERTES DIENELASTOMER
NOVEL ANIONIC POLYMERIZATION INITIATOR, USE THEREOF FOR SYNTHESIZING A DIENE ELASTOMER HAVING AN ALKYNE FUNCTION AT THE CHAIN END, AND FUNCTIONALIZED DIENE ELASTOMER

(30) Priorité: 18.10.2011 FR 1159397
(43) Date de publication de la demande: 27.08.2014
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: MATMOUR, Rachid, F-63040 Clermont-Ferrand Cedex 9 (FR); SEEBOTH, Nicolas, F-63040 Clermont-Ferrand Cedex 9 (FR)
(74) Mandataire: Le Cam, Véronique Marie Christine
(86) Numéro de dépôt international: PCT/EP2012/070451
(87) Numéro de publication internationale: WO 2013/057082

(56) Documents cités:
- MAO S S H ET AL: "Cross-conjugated polymers via condensation of a zirconocene alkynyl(benzyne) derivative generated by thermolysis of Cp2ZrMe(C6H4C@?CSiMe3)", JOURNAL OF ORGANOMETALLIC CHEMISTRY, ELSEVIER-SEQUOIA S.A. LAUSANNE, CH, vol. 521, no. 1, 23 août 1996 (1996-08-23) , pages 425-428, XP004036395, ISSN: 0022-328X, DOI: 10.1016/0022-328X(96)06353-X cité dans la demande
- JOJI OHSHITA ET AL: "Synthesis of Poly{[bis(ethynylphenyl)silylene]phenylene }s with Highly Heat-Resistant Properties", MACROMOLECULES, vol. 32, no. 19, 1 septembre 1999 (1999-09-01), pages 5998-6002, XP055024239, ISSN: 0024-9297, DOI: 10.1021/ma990314a cité dans la demande

## Description

La présente invention concerne un nouvel amorceur organométallique monofonctionnel acétylène et son utilisation pour la synthèse d'un élastomère diénique porteur d'une fonction acétylène réactive à une ou chacune de ses extrémités de chaîne.

La synthèse de copolymères à blocs n'est pas toujours simple à contrôler, en particulier lorsque l'un des monomères peut être impliqué dans des réactions secondaires. La synthèse de copolymères diéniques à blocs n'échappe pas à cette difficulté. Différents modes de synthèse sont habituellement employés pour préparer de tels copolymères à blocs.

Ainsi, selon un mode de synthèse, on polymérise successivement les deux monomères par polymérisation anionique. C'est une des méthodes les plus connues de l'homme de l'art qui consiste à polymériser le monomère diène par voie anionique, puis à se servir de l'élastomère (chaîne anionique vivante) ainsi obtenu en tant que macroamorceur pour la polymérisation du second monomère toujours par voie anionique. En fonction de la nature de ce second monomère, certaines difficultés peuvent survenir. Ainsi, au cours de la deuxième étape de polymérisation anionique, des réactions parasites induites par la présence de certaines fonctions sur le second monomère peuvent concurrencer la polymérisation. A titre d'exemple, si une fonction ester est présente sur le second monomère, la polymérisation peut s'accompagner d'une réaction d'addition élimination qui arrête la croissance des chaînes du deuxième bloc et modifie la structure chimique du produit final, donc par conséquent ses propriétés.

D'autre part, la polymérisation anionique de certains monomères, tels que les (méth)acrylates est très exothermique et les cinétiques de polymérisation sont très rapides (de l'ordre de la minute). De nombreux travaux ont été publiés traitant d'additifs (LiCl ou ROLi, par exemple) permettant de réduire la réactivité du bout de chaîne par complexation et donc la proportion de réactions secondaires, avec plus ou moins de succès. Il n'est donc pas aisé de contrôler la polymérisation anionique de tels monomères. Une autre méthode, développé par Stadler et coll. (Macromolecules 1995, 28, 3080-3097 ; Macromolecules 1995, 28, 4558) et Teyssié et Elf Atochem (Brevets EP 0749987B1 et EP 0524054B1), est l'utilisation de diphénylethylène (DPE) en fin de polymérisation du monomère diénique et la diminution de la température de réaction (-40 °C, par exemple) permettant l'obtention d'un macroamorceur lithié beaucoup moins réactif lors de l'amorçage du second monomère (méth)acrylique. Malgré une réactivité réduite par l'utilisation de DPE et/ou d'un sel de lithium (LiCl ou ROLi, par exemple) et d'une faible température, il est souvent difficile d'éviter totalement les réactions parasites et le contrôle de la polymérisation anionique du second monomère peut rester compliqué.

Un autre mode synthèse de copolymères diéniques à blocs est la combinaison d'une polymérisation anionique et de la polymérisation radicalaire contrôlée par transfert d'atome (ATRP). La synthèse d'un premier bloc diénique par polymérisation anionique peut être suivie d'une réaction de terminaison permettant d'obtenir un polymère fonctionnalisé en bout de chaîne par un groupement halogéné ; cet atome d'halogène permettrait l'amorçage de l'ATRP du deuxième monomère. La fonctionnalisation du bout de chaîne anionique par un atome d'halogène, le brome par exemple, peut s'effectuer en deux étapes : (a) la réaction de la chaîne anionique lithié vivante avec un époxyde dans le but de remplacer le carbanion par un oxanion lithié moins réactif vis-à-vis des substitutions nucléophiles (b) l'oxanion va dans un second temps réagir avec le composé halogéné, par exemple le bromure de 2-bromo-2-methylpropanoyl (seul le bromure d'acide réagit grâce à la diminution de réactivité du bout de chaîne anionique). Le polymère fonctionnalisé en bout de chaîne par un groupement halogéné pourrait alors servir de macroamorceur pour l'ATRP. Cette voie de synthèse a été utilisée par Matyjaszewski et coll. (Macromol. Chem. Phys. 1999, 200, 1094-1100) pour la synthèse de copolymère à blocs PS-b-PMMA.

Néanmoins, cette méthode s'avère présenter de nombreuses difficultés en fonction des monomères utilisés. En effet, lorsque le composé halogéné utilisé pour fonctionnaliser l'élastomère diénique issu de la polymérisation anionique, présente deux sites halogénés, comme cela est le cas sur le bromure de 2-bromo-2-methylpropanoyl, la fonctionnalisation peut également conduire à du couplage de chaîne anionique vivante par réaction de deux chaînes d'élastomère diénique vivantes sur le composé bihalogéné. En outre, un obstacle majeur de ce mode de synthèse provient de la présence de doubles liaisons pendantes dans le polymère diénique. En effet, au cours de l'ATRP du deuxième monomère, des réactions d'additions radicalaires sur les doubles liaisons de l'élastomère diénique ont lieu conduisant à l'évolution de la macrostructure, voire à de la réticulation conduisant à la formation d'un gel. Le bon contrôle de la polymérisation radicalaire est donc impossible.

Ces inconvénients ont notamment été mis en évidence par les demanderesses lors de divers essais mettant en oeuvre le butadiène et le méthacrylate de méthyle comme monomères.

Les inventeurs ont mis au point un mode de synthèse de copolymères diéniques à au moins deux blocs, dont l'un est un bloc élastomère diénique, qui soit adaptable quel que soit la nature des monomères mis en oeuvre dans cette synthèse, en surmontant notamment les inconvénients cités plus haut. Ce procédé met en oeuvre une réaction des deux blocs polymères, chacun obtenu selon un mode de polymérisation parfaitement adapté à la nature des monomères. Ceci permet de s'affranchir des inconvénients rencontrés avec les modes de synthèse envisagés précédemment. En outre, ce procédé de synthèse permet d'obtenir les copolymères dont la macrostructure est contrôlée tout en atteignant des rendements élevés. Le procédé est caractérisé en ce qu'il comprend une étape de réaction de deux polymères définis comme étant :
a) un élastomère diénique portant une fonction alcyne à une ou chacune de ses extrémités de chaîne, et
b) un polymère portant à une de ses extrémités de chaîne au moins une fonction azoture.

L'introduction d'une fonction dans un élastomère diénique peut se faire par une polymérisation anionique du monomère diène avec un amorceur organométallique portant une telle fonction. Comme amorceurs organométallique portant une fonction alcyne conviennent notamment ceux comportant une liaison carbone-lithium. Deux composés susceptibles d'introduire une fonction alcyne ont été décrits dans la littérature, à savoir le 5-trimethylsilyl-4-pentynyllithium (TMSPLi) et le 5-triéthylsilyl-4-pentynyllithium (TESPLi) décrits dans les articles Macromolecules 2011, 44, 1886-1893 et Macromolecules 2011, 44, 1969-1976. Néanmoins, il a été constaté par les auteurs que l'utilisation du 5-trimethylsilyl-4-pentynyllithium génère une désactivation des chaînes vivantes de polymères diéniques via leur réaction sur le proton voisin de l'acétylène. D'après les auteurs, cette réaction serait la conséquence de l'inefficacité de la protection de la triple liaison carbone-carbone par le groupement triméthylsilyle. Ces réactions parasites ne permettent pas le contrôle de la polymérisation des monomères et notamment une homogénéité des tailles de chaînes élastomères ainsi que leur microstructure. En outre, de telles réactions parasites limitent aussi le taux de polymère vivant ce qui est problématique pour des réactions de fonctionnalisation ultérieures qui ne seront donc que partielles et non quantitatives.

Le problème technique qui se pose est donc la recherche de moyens d'introduction d'une fonction alcyne en au moins une extrémité de chaîne d'un élastomère diénique ne présentant pas les inconvénients mentionnés ci-dessus.

La présente invention permet de résoudre ce problème en ce que les Inventeurs ont mis au point un nouvel amorceur monofonctionnel de polymérisation anionique susceptible d'introduire une fonction alcyne en bout de chaîne d'un élastomère diénique avec un rendement de fonctionnalisation élevé pouvant atteindre 100%. La polymérisation se fait de manière contrôlée et reproductible sans pénaliser d'éventuelles réactions post-polymérisation telles que des réactions de fonctionnalisation.

La présente invention a pour objet un amorceur organométallique de polymérisation anionique aromatique comportant une triple liaison carbone-carbone.

L'invention a également pour objet un procédé de synthèse d'un élastomère diénique portant une fonction alcyne à une ou chacune de ses extrémités de chaîne mettant en oeuvre ce nouvel amorceur organométallique.

L'invention a encore pour objet un élastomère diénique portant une fonction alcyne à une ou chacune de ses extrémités de chaîne.

Ainsi, l'invention a pour objet un amorceur organométallique de polymérisation anionique aromatique comportant une triple liaison carbone-carbone de formule 1 suivante : 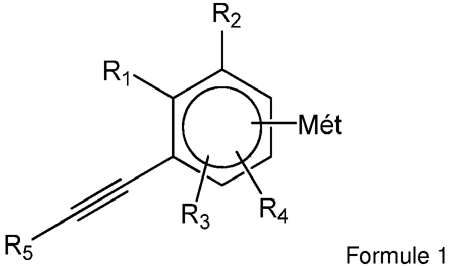 où
Mét, qui peut être porté par la position ortho, méta ou para par rapport au groupement comprenant la triple liaison carbone-carbone, désigne un métal alcalin, de préférence Li, Na ou K, ou un groupement stannyllithium SnLi, préférentiellement Met désigne un atome de lithium, et
R1, R2, ainsi que R3 et R4 qui peuvent être portés par la position ortho, méta ou para, désignent, indépendamment l'un de l'autre, un atome d'hydrogène, un groupe alkyle en C1-C15, cycloalkyle aryle en C6-C15, arylalkyle en C7-C15, pouvant être séparés du noyau aromatique par un hétéroatome tel que O ou S, et préférentiellement R1, R2, R3 et R4 désignent chacun un atome d'hydrogène,
R5 désigne un groupe alkyle en C1-C15, cycloalkyle, aryle en C6-C15, arylalkyle en C7-C15 ou un groupe protecteur de la fonction alcyne.

A titre de groupe protecteur de la fonction alcyne on peut citer tout groupement protecteur connu à cet effet, notamment un groupement hydrocarboné comprenant un atome de silicium qui est de préférence un groupement trialkylsilyle, le groupe alkyle possédant 1 à 5 atomes de carbone, et plus préférentiellement le groupement triméthylsilyle. La nature des substituants de l'atome de silicium n'a pas d'impact sur la polymérisation contrairement à ce qui a été observé avec les amorceurs de l'art antérieur.

Selon des modes de réalisation particuliers de l'invention, l'amorceur de polymérisation anionique répond à la formule 1 dans laquelle l'une au moins des caractéristiques suivantes est vérifiée, préférentiellement deux et plus préférentiellement les trois :
- Met désigne un atome de lithium
- R1, R2, R3 et R4 désignent chacun un atome d'hydrogène
- R5 désigne un groupement trialkylsilyle, le groupe alkyle possèdant 1 à 5 atomes de carbone, plus préférentiellement le groupement triméthylsilyle.

Selon ces modes de réalisation particuliers, l'amorceur de polymérisation anionique est tout particulièrement choisi parmi les composés triméthylsilylethynylphényl lithium, le groupement triméthylsilyle pouvant être en position ortho, méta ou para par rapport au groupement comprenant la triple liaison carbone-carbone. Ces composés répondent aux formules (A), (B) et (C) suivantes :

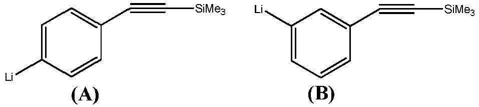

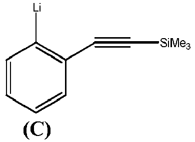

Les composés de formule (A) et (B) ont été décrits dans la littérature. A la connaissance des Demanderesses, aucune application à la polymérisation anionique de monomère diène en tant qu'amorceur n'a été envisagée par le passé. Les applications majeures de ces composés organométalliques connues de l'homme de l'art consistent en l'utilisation de sel de lithium fonctionnel alcyne pour la modification chimique de polycarbosilanes afin d'améliorer leurs propriétés de résistance à la température dans le domaine des céramiques (Macromolecules 1999, 32(19), 5998-6002) ou pour la synthèse d'oligomère de formule [Cp₂ZrMe(C₆H₃C≡CSiMe₃]n par réaction du sel de lithium avec le composé Cp₂ZrMeCl et thermolyse (Journal of Organometallic Chemistry 1996, 521(1-2), 425-28).

Bien que pouvant être synthétisé en présence de tous types de solvant inerte, l'amorceur de polymérisation anionique comprenant une fonction alcyne selon l'invention, présente l'avantage de pouvoir être synthétisé dans un solvant non aromatique tel que l'hexane. En effet, les composés de l'état de l'art, à savoir le 5-trimethylsilyl-4-pentynyllithium (TMSPLi) et le 5-triéthylsilyl-4-pentynyllithium (TESPLi), semblent ne pouvoir être synthétisés qu'en présence de benzène, l'utilisation de l'hexane entraînant une réaction parasite de cyclisation intramoléculaire et donc une inactivité de l'espèce générée vis-à-vis de la polymérisation. Le caractère cancérigène des solvants proposés par ce mode de synthèse ne permet pas d'envisager une utilisation à l'échelle industrielle d'un tel type d'amorceur.

Cette synthèse peut être réalisé par réaction d'échange halogène - métal alcalin par réaction d'un composé halogéné comprenant la fonction alcyne avec un dérivé métallique qui peut être le métal alcalin sous forme métallique ou un sel organique d'un métal alcalin.

Parmi les sels organiques d'un métal alcalin conviennent notamment ceux comportant une liaison carbone-métal alcalin. De préférence, on utilisera un sel organique ne comportant pas d'hétéroatome. Selon un mode de réalisation préférentiel de l'invention, le métal alcalin est le lithium. Parmi les sels organiques de lithium on peut citer comme composés représentatifs les organolithiens aliphatiques tels que l'éthyllithium, le n-butyllithium (n-BuLi), l'isobutyllithium, les polyméthylènes dilithium tels que le 1,4-dilithiobutane, etc...

La réaction du composé halogéné comprenant la fonction alcyne avec le dérivé métallique peut s'effectuer dans un solvant inerte qui peut être par exemple un hydrocarbure aliphatique ou alicyclique comme le pentane, l'hexane, l'heptane, l'iso-octane, le cyclohexane, le méthylcyclohexane ou un hydrocarbure aromatique comme le benzène, le toluène, le xylène ou les mélanges de ces solvants. Il va de soi que l'on préférera utiliser un solvant de type hydrocarbure aliphatique ou alicyclique pour des raisons d'hygiène et de sécurité.

La préparation de l'amorceur de polymérisation peut être faite en présence ou non d'un additif polaire, plusieurs types d'agents polaires pouvant être utilisés parmi lesquels des agents polaires non chélatants de type THF et des agents polaires chélatants possédant sur au moins deux atomes au moins un doublet non liant, comme par exemple de type tétrahydrofurfuryl éthyle éther ou tétraméthyléthylènediamine.

La synthèse de l'amorceur de polymérisation est généralement effectuée à une température comprise entre 20°C et 120°C et de préférence voisine de 20°C à 40°C.

Selon une variante de l'invention, l'amorceur de polymérisation peut être préalablement préparé séparément et de manière isolé du milieu de polymérisation.

Selon une autre variante de l'invention, l'amorceur peut être généré in situ directement dans le milieu de polymérisation par contact du composé halogéné avec le dérivé métallique.

A titre d'illustration de ce procédé de synthèse de l'amorceur de polymérisation selon l'invention, on peut se référer à la procédure décrite par Shirai, Yasuhiro et al. dans l'article Journal of the American Chemical Society 2006, 128(41), 13479-13489. Le composé est généré par réaction d'échange halogène/lithium entre le précurseur bromé et le tert-BuLi dans le THF à -80 °C. Cette réaction est illustrée ci-dessous :

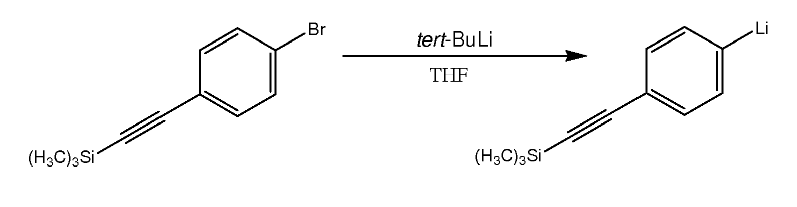

L'amorceur de polymérisation selon l'invention permet d'initier la polymérisation anionique de monomères diènes pour préparer des élastomères diéniques portant une fonction alcyne à une ou chacune de leurs extrémités de chaîne. La polymérisation est de préférence effectuée de manière connue en soi, en présence d'un solvant inerte qui peut être par exemple un hydrocarbure aliphatique ou alicyclique comme le pentane, l'hexane, l'heptane, l'iso-octane, le cyclohexane, le méthylcyclohexane ou un hydrocarbure aromatique comme le benzène, le toluène, le xylène ou les mélanges de ces solvants.

Le taux d'amorceur de polymérisation selon l'invention nécessaire pour la polymérisation des monomères est similaire au taux utilisé avec un amorceur classique du type initiateur organolithien aliphatique, tel que le n-butyllithium par exemple. Ce taux dépend essentiellement de la masse molaire visée pour l'élastomère et peut être déterminée aisément par l'homme de l'art.

La microstructure des élastomères peut être déterminée par la présence ou non d'un agent polaire et/ou randomisant et les quantités d'agent polaire et/ou randomisant employées. Ainsi, la solution à polymériser peut également contenir un agent polaire de type éther, tel que le tétrahydrofurane, ou de type aminé tel que la tétraméthyl-éthylène-diamine. Plusieurs types d'agents polaires peuvent être utilisés parmi lesquels des agents polaires non chélatants de type THF et des agents polaires chélatants possédant sur au moins deux atomes au moins un doublet non liant, comme par exemple de type tétrahydrofurfuryl éthyle éther ou tétraméthyl éthylènediamine. On peut également ajouter des agents randomisants, tels que les alcoolates de sodium. La quantité de ces composés peut aisément être déterminée par l'homme de l'art en fonction de la microstructure souhaitée pour l'élastomère.

La polymérisation peut être effectuée en continu ou en discontinu. On effectue généralement la polymérisation à une température comprise entre 20 °C et 120 °C et de préférence voisine de 30 °C à 90 °C, particulièrement de 30 °C à 50 °C.

La réaction de polymérisation permet de préparer un élastomère diénique vivant portant en extrémité de chaîne un groupement de formule 2 : 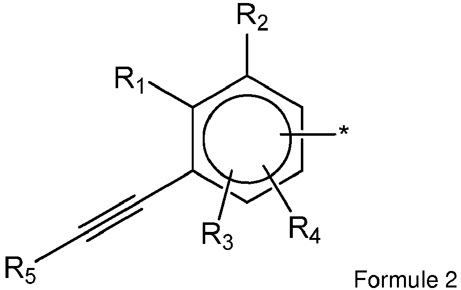
R1, R2, R3, R4 et R5 étant tels que définis plus haut et
* désigne un point de liaison avec la chaîne élastomère.

Le rendement de fonctionnalisation en groupement hydrocarboné comprenant une fonction alcyne, observé avec l'amorceur de polymérisation selon l'invention est d'au moins 80% et d'au plus 100%.

Selon une variante de l'invention, la réaction de polymérisation est ensuite stoppée par la désactivation des chaînes vivantes de manière connue en soi. On obtient ainsi un élastomère diénique portant en une extrémité de chaîne une fonction alcyne.

Selon une autre variante de l'invention, l'élastomère diénique vivant issu de la réaction de polymérisation et comprenant une fonction alcyne à l'extrémité non réactive de la chaîne, peut ensuite être fonctionnalisé pour préparer un élastomère diénique fonctionnalisé, couplé ou étoilé selon la nature de l'agent de fonctionnalisation utilisé. Cette fonctionnalisation post-polymérisation est effectuée de manière connue en soi.

La réaction de fonctionnalisation de l'élastomère diénique vivant, peut se dérouler à une température comprise entre -20°C et 100 °C, par addition d'un agent de fonctionnalisation, de couplage et/ou d'étoilage sur les chaînes polymériques vivantes ou inversement.

Selon les cas, la réaction peut être effectuée en solution ou en phase gazeuse tel que décrit par exemple dans le brevet EP1072613 B1 qui concerne la fonctionnalisation par le dioxyde de carbone en vue d'obtenir des polymères mono acide carboxylique.

Les agents de fonctionnalisations peuvent par exemple introduire une ou plusieurs fonctions non-polaires au sein l'élastomère. De tels agents sont connus en soi tels que par exemple Me₂SiCl₂, MeSiCl₃, SiCl₄, le 1,6-bis-trichlorosilylhexane, Bu₂SnCl₂, SnCl₄...

Les agents de fonctionnalisations peuvent également introduire une ou plusieurs fonctions polaires au sein de l'élastomère. La fonction polaire peut être choisie par exemple parmi les fonctions de type aminé, silanol, alkoxysilane, alkoxysilane portant un groupement aminé, époxyde, éther, ester, hydroxyl, acide carboxylique ... Ces fonctions améliorent notamment l'interaction entre une charge inorganique et l'élastomère.

Il est possible, d'obtenir un mélange de chaînes élastomères portant, outre la fonction alcyne commune à toutes les chaînes, des fonctions différentes en faisant réagir successivement différents agents de fonctionnalisation. Par exemple, il est possible de faire réagir dans un premier temps les chaînes vivantes avec un agent de couplage ou d'étoilage, puis de faire réagir les chaîne vivantes restantes avec un agent de fonctionnalisation introduisant une fonction en extrémité de chaîne.

Il faut comprendre que lorsque les chaînes d'élastomère diénique vivantes réagissent avec un agent de fonctionnalisation, de couplage ou d'étoilage, l'élastomère diénique comprendra autant de fonctions alcynes que de chaînes vivantes ayant été fonctionnalisées, couplées ou étoilées, ces fonctions alcynes se situant en extrémité des chaînes. Ainsi, l'élastomère diénique selon l'invention porte un groupement comprenant à une ou chacune de ses extrémités de chaîne une fonction alcyne selon la réaction post polymérisation subie.

Le groupement issu de la fonctionnalisation post-polymérisation peut se situer en bout de chaîne. On dira alors que l'élastomère diénique portant une fonction alcyne en une extrémité de chaine est fonctionnalisé à l'autre extrémité de chaîne. C'est généralement un élastomère obtenu par réaction d'un élastomère vivant sur un agent de fonctionnalisation, c'est à dire toute molécule au moins monofonctionnelle, la fonction étant tout type de groupement chimique connu par l'homme de l'art pour réagir avec un bout de chaîne vivant.

Le groupement issu de la fonctionnalisation post-polymérisation peut se situer dans la chaîne élastomère principale linéaire. On dira alors que l'élastomère diénique est couplé et porte une fonction alcyne à chacune de ses deux extrémités de chaîne. C'est généralement un élastomère obtenu par réaction d'un élastomère vivant sur un agent de couplage, c'est à dire toute molécule au moins difonctionnelle, la fonction étant tout type de groupement chimique connu par l'homme de l'art pour réagir avec un bout de chaîne vivant.

Le groupement issu de la fonctionnalisation post-polymérisation peut être central auquel n chaînes ou branches élastomères (n>2) sont liées formant une structure en étoile de l'élastomère. On dira alors que l'élastomère diénique est étoilé à n branches et porte une fonction alcyne à chacune de ses n extrémités de chaîne. C'est généralement un élastomère obtenu par réaction d'un élastomère vivant sur un agent d'étoilage, c'est à dire toute molécule multifonctionnelle, la fonction étant tout type de groupement chimique connu par l'homme de l'art pour réagir avec un bout de chaîne vivant.

Selon le mode de réalisation préférentiel de l'invention selon lequel R₅ désigne un groupe protecteur de la fonction alcyne, le procédé de synthèse de l'élastomère diénique portant à une ou chacune de ses extrémités de chaîne un groupement comprenant une fonction alcyne, peut comprendre une étape de déprotection de la fonction alcyne par des moyens connus en soi. Cette étape est mise en oeuvre après le stoppage de la polymérisation ou de la fonctionnalisation post-polymérisation. On peut à titre d'exemple faire réagir les chaînes fonctionnalisées par le groupement alcyne protégé avec un acide, une base, un dérivé fluoré tel le fluorure de tétrabutylammonium, un sel d'argent tel que le nitrate d'argent, etc...pour déprotéger la fonction alcyne. Ces différentes méthodes sont décrites dans l'ouvrage « Protective Groups in Organic Synthesis, T. W. Green, P. G. M. Wuts, Third Edition,1999 ». A titre d'illustration, R5 représente un atome d'hydrogène à l'issue de cette étape.

Selon ce même mode de réalisation préférentiel de l'invention, le groupe protecteur de la fonction alcyne est conservé en vue de masquer la réactivité de la fonction lors d'une utilisation ultérieure de l'élastomère.

Par élastomère diénique susceptible d'être obtenu par mise en oeuvre du procédé conforme à l'invention, on entend tout homopolymère obtenu par polymérisation d'un monomère diène conjugué ayant de 4 à 12 atomes de carbone, tout copolymère obtenu par copolymérisation d'un ou plusieurs diènes conjugués entre eux ou avec un ou plusieurs composés vinylaromatiques ayant de 8 à 20 atomes de carbone.

A titre de diènes conjugués conviennent notamment le butadiène-1,3, le 2-méthyl-1,3-butadiène, les 2,3-di(alcoyle en C1 à C5)-1,3-butadiène tels que par exemple le 2,3-diméthyl-1,3-butadiène, 2,3-diéthyl-1,3-butadiène, 2-méthyl-3-éthyl-1,3-butadiène, le 2-méthyl-3-isopropyl-1,3-butadiène, le phényl-1,3-butadiène, le 1,3-pentadiène, le 2,4-hexadiène, etc...

A titre de composés vinylaromatiques conviennent notamment le styrène, l'ortho-, méta, para-méthylstyrène, le mélange commercial "vinyltoluène", le para-tertiobutylstyrène, les méthoxystyrènes, le vinylmésitylène, le divinylbenzène, le vinylnaphtalène, etc...

Les copolymères peuvent contenir entre 99 % et 20 % en poids d'unités diéniques et de 1 % à 80 % en poids d'unités vinylaromatiques.

L'élastomère diénique portant à une ou chacune de ses extrémités de chaîne un groupement comprenant une fonction alcyne conforme à l'invention est choisi préférentiellement dans le groupe des élastomères diéniques fortement insaturés constitué par les polybutadiènes (BR), les polyisoprènes (IR) de synthèse, les copolymères de butadiène, les copolymères d'isoprène et les mélanges de ces élastomères. De tels copolymères sont plus préférentiellement choisis dans le groupe constitué par les copolymères de butadiène et les copolymère de l'isoprène, plus particulièrement les copolymères de butadiène-styrène (SBR), les copolymères d'isoprène-butadiène (BIR), les copolymères d'isoprène-styrène (SIR) et les copolymères d'isoprène-butadiène-styrène (SBIR). De tels copolymères sont plus préférentiellement choisis parmi les copolymères de butadiène-styrène (SBR).

Conviennent notamment les polybutadiènes ayant une teneur (% molaire) en unités -1,2 comprise entre 4% et 80% ou ceux ayant une teneur (% molaire) en cis-1,4 supérieure à 80%, les polyisoprènes, les copolymères de butadiène-styrène et en particulier ceux ayant une Tg (température de transition vitreuse, mesurée selon ASTM D3418) entre 0°C et -70°C et plus particulièrement entre -10°C et -60°C, une teneur en styrène comprise entre 5% et 60% en poids et plus particulièrement entre 20% et 50%, une teneur (% molaire) en liaisons -1,2 de la partie butadiénique comprise entre 4% et 75%, une teneur (% molaire) en liaisons trans-1,4 comprise entre 10% et 80%, les copolymères de butadiène-isoprène et notamment ceux ayant une teneur en isoprène comprise entre 5% et 90% en poids et une Tg de - 40°C à - 80°C, les copolymères isoprène-styrène et notamment ceux ayant une teneur en styrène comprise entre 5% et 50% en poids et une Tg comprise entre - 5 °C et - 50 °C.

Dans le cas des copolymères de butadiène-styrène-isoprène conviennent notamment ceux ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur (% molaire) en unités -1,2 de la partie butadiénique comprise entre 4% et 85%, une teneur (% molaire) en unités trans -1,4 de la partie butadiénique comprise entre 6% et 80%, une teneur (% molaire) en unités -1,2 plus -3,4 de la partie isoprénique comprise entre 5% et 70% et une teneur (% molaire) en unités trans -1,4 de la partie isoprénique comprise entre 10% et 50%, et plus généralement tout copolymère butadiène-styrène-isoprène ayant une Tg comprise entre - 5 °C et - 70 °C.

L'élastomère diénique peut être statistique, séquencé ou microséquencé. Il peut avoir toute microstructure appropriée, qui est fonction des conditions particulières de mise en oeuvre de la réaction de polymérisation, telles que la présence ou non d'un agent polaire et/ou randomisant et les quantités d'agent polaire et/ou randomisant employées. Ces aspects sont connus et maîtrisés de l'homme de l'art.

Ainsi, selon l'invention, on obtient un élastomère diénique répondant à la formule 3 suivante portant à une ou chacune de ses extrémités de chaîne un groupement comprenant une fonction alcyne :

(A - E)ₙ-X

où
X désigne un groupement hydrocarboné de valence n ou un groupement issu d'un agent de fonctionnalisation, de couplage et d'étoilage comprenant au moins un atome choisi parmi O, N, Si, Sn ;
A est un radical monovalent répondant à la formule 2 suivante 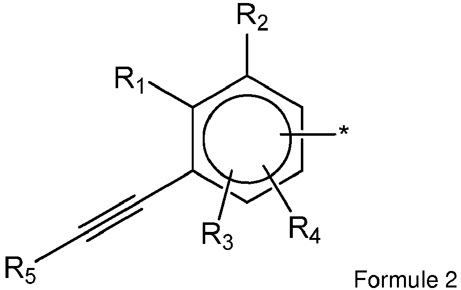 dans laquelle :
   R1, R2, ainsi que R3 et R4 qui peuvent être portés par la position ortho, méta ou para, désignent, indépendamment l'un de l'autre, un atome d'hydrogène, un groupe alkyle en C1-C15, cycloalkyle en C5-C15, aryle en C6-C15, arylalkyle en C7-C15, pouvant être séparés du noyau aromatique par un hétéroatome tel que O ou S, et préférentiellement R1, R2, R3 et R4 désignent chacun un atome d'hydrogène,
   R5 désigne un atome d'hydrogène, un groupe alkyle en C1-C5, cycloalkyle, aryle en C6-C15, arylalkyle en C7-C15 ou un groupe protecteur de la fonction alcyne et,
   * désigne un point de liaison avec la chaîne élastomère E, qui peut être porté par la position ortho, méta, ou para de A par rapport au groupement comprenant la triple liaison carbone-carbone, désigne l'élastomère diénique, et
n est un nombre entier allant 1 à 12, de préférence de 1 à 4.

Cet élastomère diénique portant une fonction alcyne à une ou chacune de ses extrémités de chaîne fait également l'objet de l'invention.

Selon des variantes de l'invention X comprend un groupement amine, silanol, alkoxysilane, alkoxysilane portant un groupement amine, époxyde, éther, ester, hydroxyl ou encore acide carboxylique.

Selon d'autres variantes de l'invention, X comprend un atome de Sn ou un atome de Si. Selon ces variantes, n est généralement d'au moins 2, et de préférence 2, 3 ou 4.

Selon une autre variante de l'invention, l'élastomère diénique est constitué d'un coupage ou mélange d'élastomères diéniques portant à une ou chacune de ses extrémités de chaîne un groupement répondant à la formule 2 comprenant une fonction alcyne.

Il est entendu que ces différentes variantes de l'invention sont combinables entre elles.

L'élastomère diénique portant à une ou chacune de ses extrémités de chaîne un groupement comprenant une fonction alcyne conforme à l'invention est obtenu avec un taux de fonctionnalisation élevé. Par « élevé » on entend un taux de fonctionnalisation d'au moins 80%, voire d'au moins 90%, pouvant atteindre 100%. En outre, l'élastomère diénique portant à une ou chacune de ses extrémités de chaîne un groupement comprenant une fonction alcyne conforme à l'invention est obtenu avec des caractéristiques bien contrôlées (masse molaire, polydispersité, microstructure et macrostructure).

Cet élastomère diénique est tout à fait adapté à la synthèse de copolymère blocs selon la nouvelle méthode mise au point par les Inventeurs par réaction 1,3-dipolaire sur au moins un bloc d'un autre polymère possédant une fonction azoture à une ou chacune de ses extrémités de chaîne. Du fait du taux de fonctionnalisation élevé obtenu avec le procédé de l'invention, le rendement de couplage, c'est-à-dire de synthèse de copolymère blocs est lui-même élevé et approche les 100%.

Les caractéristiques précitées de la présente invention, ainsi que d'autres, seront mieux comprises à la lecture de la description de l'exemple de réalisation de l'invention, donné à titre illustratif et non limitatif.

### EXEMPLE DE REALISATION DE L'INVENTION.

### Mesures et tests utilisés

Techniques expérimentales utilisées pour la caractérisation avant cuisson des polymères obtenus :
(a) Détermination de la distribution de masses molaires par la technique de chromatographie d'exclusion stérique Triple Détection (SEC3D).
   1) Principe de la mesure:
      La chromatographie d'exclusion stérique ou SEC (Size Exclusion Chromatography) permet de séparer les macromolécules en solution suivant leur taille à travers des colonnes remplies d'un gel poreux. Les macromolécules sont séparées suivant leur volume hydrodynamique, les plus volumineuses étant éluées en premier.
      Associée à 3 détecteurs (3D), un réfractomètre, un viscosimètre et un détecteur de diffusion de la lumière à 90°, la SEC permet d'appréhender la distribution de masses molaires absolues d'un polymère. Les différentes masses molaires absolues moyennes en nombre (Mn), en poids (Mw) et l'indice de polymolécularité (Ip = Mw/Mn) peuvent également être calculées.
   2) Préparation du polymère:
      Il n'y a pas de traitement particulier de l'échantillon de polymère avant analyse. Celui-ci est simplement solubilisé dans du (tétrahydrofuranne + 1%vol. de diisopropylamine + 1%vol. de triéthylamine) à une concentration d'environ 1 g/L. Puis la solution est filtrée sur filtre de porosité 0.45µm avant injection.
   3) Analyse SEC3D:
      L'appareillage utilisé est un chromatographe « WATERS Alliance ». Le solvant d'élution est du (tétrahydrofuranne + 1%vol. de diisopropylamine + 1%vol. de triéthylamine), le débit de 0,5 mL/min, la température du système de 35°C. On utilise un jeu de quatre colonnes POLYMER LABORATORIES en série, de dénominations commerciales : deux « MIXED A LS » et deux « MIXED B LS »
         Le volume injecté de la solution de l'échantillon de polymère est 100 µL. Le système de détection utilisé est le « TDA 302 de VISCOTEK », il est composé d'un réfractomètre différentiel, d'un viscosimètre différentiel et d'un détecteur de diffusion de la lumière à 90°. Pour ces 3 détecteurs, la longueur d'onde est de 670nm. Pour le calcul des masses molaires moyennes est intégrée la valeur de l'incrément d'indice de réfraction dn/dC de la solution de polymère, valeur préalablement définie dans du (tétrahydrofuranne + 1%vol. de diisopropylamine + 1%vol. de triéthylamine) à 35°C et 670nm. Le logiciel d'exploitation des données est le système « OMNISEC de VISCOTEK».
(b) Les températures de transition vitreuse Tg des polymères sont mesurées au moyen d'un calorimètre différentiel (" differential scanning calorimeter "). L'analyse est réalisée selon les requis de la norme ASTM D3418-08.
(c) Les analyses RMN sont réalisées sur un spectromètre BRUKER AVANCE 500MHz équipé d'une sonde " large bande " BBIz-grad 5 mm. L'expérience RMN 1 H quantitative, utilise une séquence simple impulsion 30° et un délai de répétition de 3 secondes. Les échantillons sont solubilisés dans le sulfure de carbone (CS₂). 100 µL de cyclohexane deutéré (C₆D₁₂) sont ajoutés pour le signal de lock.
   Le spectre RMN 1 H permet de quantifier les motifs (CH₃)₃Si par intégration du signal caractéristique des protons SiCH3 entre 0.20ppm et 0.10ppm.
   Le spectre RMN 2D HMQC ¹H-²⁹Si permet de vérifier la nature de la fonction grâce aux valeurs de déplacements chimiques des noyaux Silicium et des protons au voisinage ²J (via 2 liaisons).
(d) La spectroscopie proche infrarouge (NIR) est utilisée pour déterminer quantitativement la microstructure de l'élastomère (répartition relative des unités butadiène 1,2-vinyl, 1,4-trans et 1,4 cis). Le principe de la méthode repose sur la loi de Beer-Lambert généralisée à un système multicomposants. La méthode étant indirecte, elle fait appel à un étalonnage multivarié [Vilmin, F.; Dussap, C.; Coste, N. Applied Spectroscopy 2006, 60, 619-29] réalisé à l'aide d'élastomères étalons de composition déterminée par RMN 13C. La microstructure est alors calculée à partir du spectre NIR d'un film d'élastomère d'environ 730 µm d'épaisseur. L'acquisition du spectre est réalisée en mode transmission entre 4000 et 6200 cm-1 avec une résolution de 2 cm-1, à l'aide d'un spectromètre proche infrarouge à transformée de Fourier Bruker Tensor 37 équipé d'un détecteur InGaAs refroidi par effet Peltier.

La spectroscopie moyen infrarouge permet de démontrer qualitativement la consommation des fonctions alcyne et azoture au cours de la réaction « click ». L'acquisition du spectre est réalisée en mode transmission entre 4000 et 400 cm-1 avec une résolution de 2 cm-1, à l'aide d'un spectromètre à transformée de Fourier Vertex 70-2 équipé d'un détecteur DTGS.

### Exemple 1 : Synthèse de polybutadiène fonctionnel acétylène protégé selon l'invention:

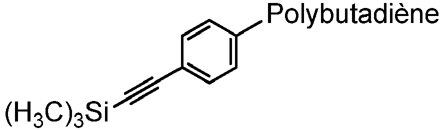

### A / Synthèse de l'amorceur selon l'invention:

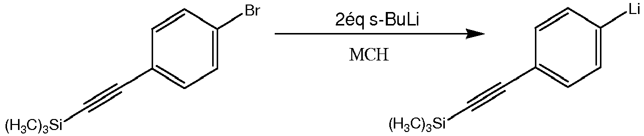

L'amorceur fonctionnel acétylène protégé est préparé par dissolution de 1,9g (7,5.10⁻³ mol) de 1-bromo-4-trimethylsilylethynylphenyle dans 65mL de méthylcyclohexane à température ambiante sous azote, puis par ajout de 0,11 mL de tétraméthyléthylènediamine et de 11,7mL (15.10⁻³ mol) d'une solution de s-BuLi à 1,28 mol/L. La réaction d'échange halogène/lithium est laissée sous agitation pendant 45 minutes à température ambiante, puis la solution d'amorceur est dosée par dosage de type Gilman. La concentration en espèce active est de 0,114 mol/L.

### B/ Synthèse du polybutadiène fonctionnel acétylène protégé:

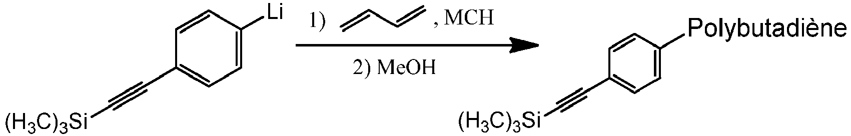

La polymérisation anionique est effectuée dans une bouteille capsulée sous agitation modérée et sous atmosphère inerte d'azote. Avant de débuter la polymérisation, 94mL de méthylcyclohexane sont introduits dans la bouteille. La bouteille est capsulée et un barbotage à l'azote est effectué pendant 10 minutes. 15mL de butadiène sont ensuite injectés dans la bouteille. Une préneutralisation des impuretés est faite par ajout dosé de n-BuLi directement sur le mélange de monomère, solvant et éventuellement agent polaire.
La solution d'amorceur est ajoutée sur ce mélange préneutralisé de solvant et de butadiène. La température du milieu réactionnel est de 40 °C. En fin de polymérisation, une solution de méthanol en solution dans du méthylcyclohexane est ajoutée sur le polymère vivant afin de protoner les chaînes vivantes.
La solution de polymère est soumis à un traitement antioxydant par addition de 0,2 parties pour cent parties d'élastomères (pce) de 4,4'-méthylène-bis-2,6-tert-butylphénol et de 0,2 parties pour cent parties d'élastomères (pce) de N-(1,3-diméthylbutyl)-N'-phényl-p-phénylènediamine, puis le polymère est séché par étuvage à 60 °C pendant 1 jour. Il peut également être utilisé directement en solution pour l'étape de déprotection de la fonction acétylène.
Le taux de conversion est de 80%. Le rendement de fonctionnalisation, quantifié par RMN ¹H, est de 90%. Le polybutadiène présente un taux molaire de 31% d'unité vinylique. Les caractérisations SEC indiquent une Mn = 54 000 g/mol et un Ip = 1,11. L'analyse IR démontre la présence d'une bande vers 2159 cm⁻¹ correspondant à la bande de vibration de l'acétylène protégé. La Tg du polymère est de -79 °C.

### Exemple 2: Synthèse de polybutadiène fonctionnel acétylène à partir du polybutadiène fonctionnel acétylène protégé :

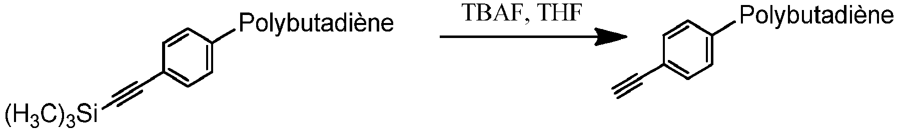

2 g de polybutadiène (Mn = 54 000 g/mol et Ip = 1,11) sont dissous dans 12 mL de THF. 0,37 mL (0,37 mmol) d'une solution de TBAF à 1 M dans le THF sont ajoutés à la solution de polymère. Le milieu réactionnel est laissé sous agitation pendant 24h à température ambiante, puis le polymère est précipité dans le méthanol. Le polymère est remis en solution dans du toluène puis soumis à un traitement antioxydant par addition de 0,2 parties pour cent parties d'élastomères (pce) de 4,4'-méthylène-bis-2,6-tert-butylphénol et de 0,2 parties pour cent parties d'élastomères (pce) de N-(1,3-diméthylbutyl)-N'-phényl-p-phénylènediamine. Le polymère est séché par étuvage à 60°C pendant 1 jour et 1,8 g de polymère sont récupérés.
Le rendement de déprotection estimé par RMN ¹H est de 100%. L'analyse IR démontre la disparition de la bande à 2159 cm⁻¹ et la présence d'une nouvelle bande vers 2110 cm⁻¹ correspondant à la bande de vibration de l'acétylène déprotégé.

On obtient ainsi le polybutadiène portant une fonction alcyne en extrémité de chaîne conformément à l'invention.
Ce polybutadiène est parfaitement adapté à la synthèse d'un copolymère à blocs par réaction avec un polymère portant une fonction azoture en extrémité de chaîne.

### Exemple 3 : Synthèse de poly(méthacrylate de méthyle) halogéné

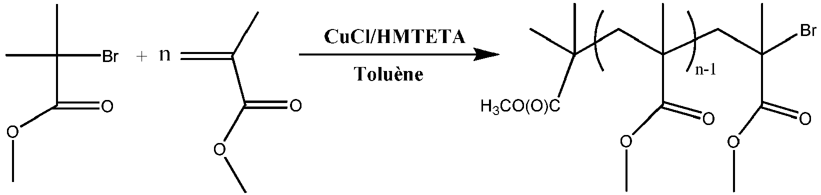

Dans un tube de Schlenk muni d'un barreau aimanté, 24,75 mg (250 µmol) de CuCl, 136 µL d'HMTETA (500 µmol) et 15,23 mL (0,142mol) de MMA sont introduits sous flux d'azote. Le mélange est dissout dans 15,3 mL de toluène. Après dissolution, 48,76 mg (0,269 mmol) d'α-bromoisobutyrate de méthyle sont additionnés, puis 3 cycles de dégazage (vide/azote) sont effectués. Le ballon réactionnel sous azote est placé dans un bain d'huile à 60°C pour une durée de 20 heures.
En fin de réaction, le mélange réactionnel est passé sur colonne d'alumine avec le toluène ou le THF comme éluant afin d'éliminer les résidus catalytiques de cuivre. La solution obtenue est concentrée à l'évaporateur rotatif et le polymère est précipité dans le méthanol. Le polymère est séché une nuit à l'étuve sous vide à 60 °C et 13,5 g de polymère sont récupérés.
Le polymère caractérisé par SEC possède une Mn = 55 400 g/mol et un Ip = 1,08. La Tg du polymère est de 113 °C.

### Exemple 4 : Synthèse de poly(méthacrylate de méthyle) fonctionnel azoture

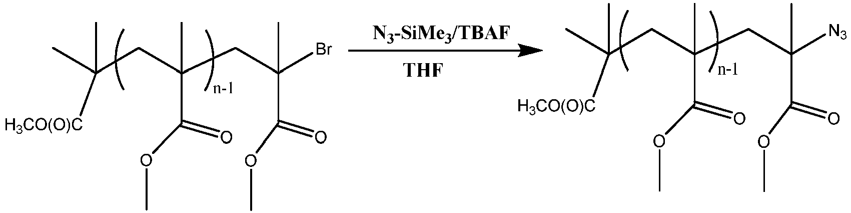

Dans un ballon bicol muni d'un barreau aimanté, 3g (5,4.10⁻⁵ mol, 1 eq) de PMMA fonctionnel brome sont dissous dans 15 mL de THF anhydre. 0,54 mL d'une solution de triméthylsilylazoture à 1 M dans le THF (10 eq) et 0,54 mL de TBAF (10 eq) sont ajoutés au polymère. La réaction de fonctionnalisation est laissée sous agitation pendant 5 jours à 40 °C. Le milieu réactionnel est concentré à l'évaporateur rotatif et le polymère est précipité dans le méthanol. Le polymère est séché une nuit à l'étuve sous vide à 60 °C et 2,8g de polymère sont récupérés.
L'analyse IR démontre la présence d'une bande vers 2115 cm⁻¹ correspondant à la bande de vibration de l'azoture.

### Exemple 5: Synthèse du copolymère à blocs polybutadiène-poly(méthacrylate de méthyle) :

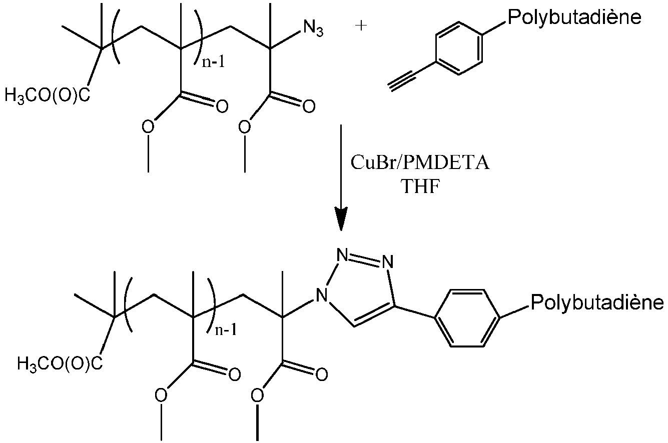

Dans un ballon bicol muni d'un barreau aimanté, 920 mg de PMMA (Mn = 55 400 g/mol et Ip = 1,08) fonctionnel azoture (1,66.10⁻⁵ mole, 0,9 eq) et 1 g de PB (Mn = 54 000 g/mol et Ip = 1,1) fonctionnel acétylène (1,85.10⁻⁵ mol, 1 eq) sont introduits et dissous dans 15 mL de THF anhydre. Après dissolution des polymères, 20 µL de PMDETA (pentaméthyldiéthylènetriamine) sont injectés sous flux d'azote. Plusieurs cycles de dégazage (vide/azote) sont effectués.
Dans un Schlenk préalablement séché et muni d'un barreau aimanté, 6,875 mg de CuBr sont introduits et la solution de polymères et PMDETA est additionnée sur le CuBr sous flux d'azote. Le milieu réactionnel est chauffé dans un bain d'huile à 55°C et laissé sous agitation pendant 48 heures.
Le milieu réactionnel est passé sur colonne d'alumine pour retirer les résidus de cuivre, puis concentré à l'évaporateur rotatif. Le copolymère est précipité dans le méthanol. Le copolymère remis en solution dans du toluène puis soumis à un traitement antioxydant par addition de 0,2 parties pour cent parties d'élastomères (pce) de 4,4'-méthylène-bis-2,6-tert-butylphénol et de 0,2 parties pour cent parties d'élastomères (pce) de N-(1,3-diméthylbutyl)-N'-phényl-p-phénylènediamine est séché par étuvage à 60°C pendant 1 jour. 1,5 g de copolymère sont récupérés après séchage.
Le copolymère à blocs analysé par IR a démontré la disparition des deux bandes correspondant à l'acétylène et à l'azoture. L'analyse RMN a indiqué la disparition du signal du proton de l'acétylène à 2,9 ppm. La caractérisation SEC a démontré une pureté du copolymère d'au moins 90% (Mn = 105400 g/mol et un Ip = 1,2). Le copolymère possède deux Tg de l'ordre -79 °C et 113 °C.

### Exemple 6 : Synthèse du copolymère à blocs polybutadiène - polystyrène :

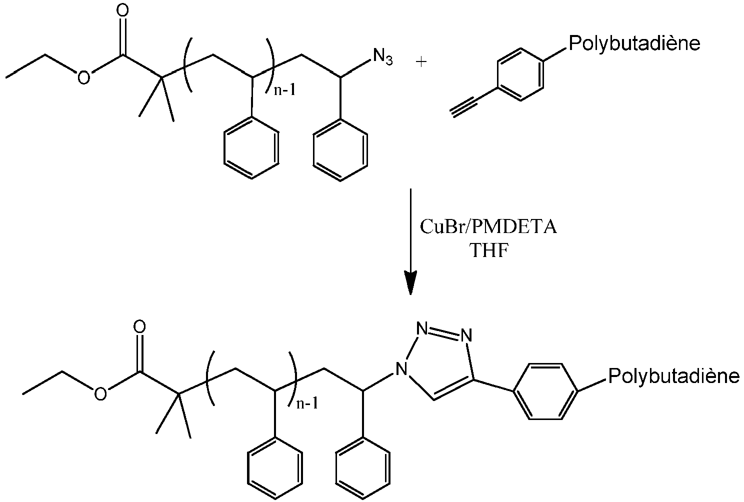

Dans un ballon bicol muni d'un barreau aimanté, 920 mg de polystyrène (Mn = 2 500 g/mol et Ip = 1,3) fonctionnel azoture (1,96.10⁻⁵ mole, 0,94 eq), commercialisé par la société Sigma-Aldrich, et 1 g de PB (Mn = 48 000 g/mol et Ip = 1,1) fonctionnel acétylène à 94% d'après l'analyse RMN¹H (2,08.10⁻⁵ mol, 1 eq) sont introduits et dissous dans 15 mL de THF anhydre. Après dissolution des polymères, 23 µL de PMDETA sont injectés sous flux d'azote. Plusieurs cycles de dégazage (vide/azote) sont effectués.
Dans un Schlenk préalablement séché et muni d'un barreau aimanté, 7,73 mg de CuBr sont introduits et la solution de polymères et PMDETA est additionnée sur le CuBr sous flux d'azote. Le milieu réactionnel est chauffé dans un bain d'huile à 55°C et laissé sous agitation pendant 48 heures.
Le milieu réactionnel est passé sur colonne d'alumine pour retirer les résidus de cuivre, puis concentré à l'évaporateur rotatif. Le copolymère est précipité dans le méthanol. Le copolymère remis en solution dans du toluène puis soumis à un traitement antioxydant par addition de 0,2 parties pour cent parties d'élastomères (pce) de 4,4'-méthylène-bis-2,6-tert-butylphénol et de 0,2 parties pour cent parties d'élastomères (pce) de N-(1,3-diméthylbutyl)-N'-phényl-p-phénylènediamine est séché par étuvage à 60°C pendant 1 jour. 1,5 g de copolymère sont récupérés après séchage.
Le copolymère à blocs analysé par IR a démontré la disparition des deux bandes bande à 2092cm⁻¹ caractéristique du polystyrène de départ et de bande à 2110cm⁻¹ caractéristique de l'acétylène déprotégé. L'analyse RMN a indiqué la disparition du signal du proton de l'acétylène à 2,9 ppm. La caractérisation SEC a démontré une pureté du copolymère d'au moins 90% (Mn = 51500 g/mol et un Ip = 1,2). Le copolymère possède deux Tg de l'ordre -80 °C et 75 °C.

## Revendications

1. Amorceur organométallique de polymérisation anionique de formule 1 suivante : 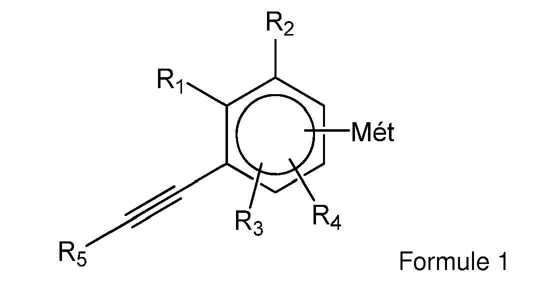 où
Mét, qui peut être porté par la position ortho, méta ou para, désigne un métal alcalin, de préférence Li, Na ou K, ou un groupement stannyllithium SnLi, préférentiellement Mét désigne un atome de lithium, et
R1, R2, ainsi que R3 et R4 qui peuvent être portés par la position ortho, méta ou para, désignent, indépendamment l'un de l'autre, un atome d'hydrogène, un groupe alkyle en C1-C15, cycloalkyle en C5-C15, aryle en C6-C15, arylalkyle en C7-C15, pouvant être séparés du noyau aromatique par un hétéroatome tel que O ou S, et préférentiellement R1, R2, R3 et R4 désignent chacun un atome d'hydrogène, et
R5 désigne un groupe alkyle en C1-C5, cycloalkyle en C5-C15, aryle en C6-C15, arylalkyle en C7-C15 ou un groupe protecteur de la fonction alcyne,
à l'exception des composés 4-[2-(triméthylsilyl)éthynyl]phényllithium et 3-[2-(triméthylsilyl)éthynyl]phényllithium.

2. Amorceur de polymérisation anionique selon la revendication 1, **caractérisé en ce qu'**il s'agit du 2-[2-(triméthylsilyl)éthynyl]phényllithium de formule) (C):

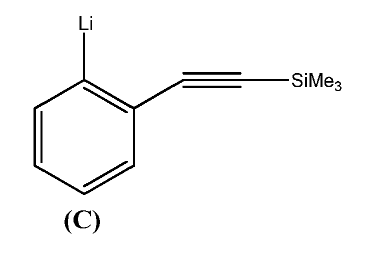

3. Procédé de synthèse d'un élastomère diénique portant à une ou chacune de ses extrémités de chaîne un groupement comprenant une fonction alcyne, **caractérisé en ce qu'**il comprend la polymérisation anionique d'au moins un monomère diène conjugué initiée par un composé organométallique comprenant une liaison alcyne de formule 1 : 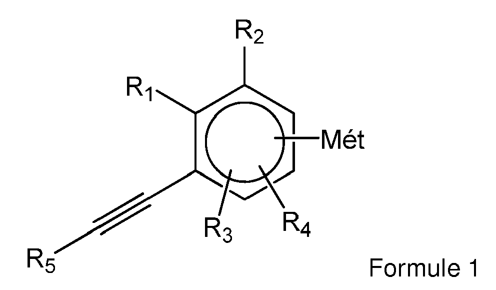 où
Mét, qui peut être porté par la position ortho, méta ou para par rapport au groupement comprenant la triple liaison carbone-carbone, désigne un métal alcalin, de préférence Li, Na ou K, ou un groupement stannyllithium SnLi, préférentiellement Mét désigne un atome de lithium, et
R1, R2, ainsi que R3 et R4 qui peuvent être portés par la position ortho, méta ou para, désignent, indépendamment l'un de l'autre, un atome d'hydrogène, un groupe alkyle en C1-C15, cycloalkyle en C5-C15, aryle en C6-C15 arylalkyle en C7-C15, pouvant être séparés du noyau aromatique par un hétéroatome tel que O ou S, et préférentiellement R1, R2, R3 et R4 désignent chacun un atome d'hydrogène, et
R5 désigne un groupe alkyle en C1-C5, cycloalkyle en C5-C15, aryle en C6-C15, arylalkyle en C7-C15 ou un groupe protecteur de la fonction alcyne.

4. Procédé de synthèse d'un élastomère diénique portant à une ou chacune de ses extrémités de chaîne un groupement comprenant une fonction alcyne selon la revendication 3, **caractérisé en ce qu'**il comprend la fonctionnalisation de l'élastomère diénique par réaction de l'élastomère diénique vivant issu de la polymérisation avec un agent de fonctionnalisation, de couplage ou d'étoilage.

5. Procédé de synthèse d'un élastomère diénique portant à une ou chacune de ses extrémités de chaîne un groupement comprenant une fonction alcyne selon la revendication 3 ou 4, **caractérisé en ce qu'**il comprend la déprotection de la fonction alcyne lorsque R5 désigne un groupe protecteur de la fonction alcyne.

6. Élastomère diénique portant à une ou chacune de ses extrémités de chaîne un groupement comprenant une fonction alcyne, répondant à la formule 3 suivante :
(A - E)ₙ- X Formule 3
où
X désigne un groupement hydrocarboné de valence n ou un groupement issu d'un agent de fonctionnalisation, de couplage ou d'étoilage comprenant au moins un atome choisi parmi O, N, Si, Sn ;
A est radical monovalent répondant à la formule 2 suivante 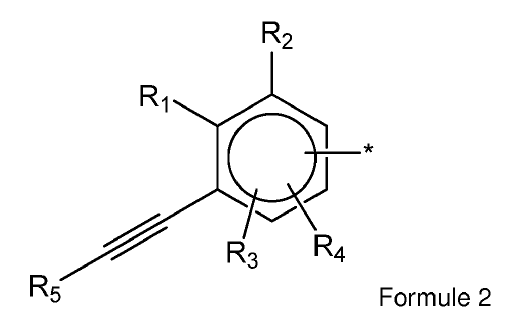 dans laquelle :
R1, R2, ainsi que R3 et R4 qui peuvent être portés par la position ortho, méta ou para, désignent, indépendamment l'un de l'autre, un atome d'hydrogène, un groupe alkyle en C1-C15, cycloalkyle en C5-C15, aryle en C6-C15, arylalkyle en C7-C15, pouvant être séparés du noyau aromatique par un hétéroatome tel que O ou S, et préférentiellement R1, R2, R3 et R4 désignent chacun un atome d'hydrogène,
R5 désigne un atome d'hydrogène, un groupe alkyle en C1-C5, cycloalkyle, aryle en C6-C15, arylalkyle en C7-C15 ou un groupe protecteur de la fonction alcyne et,
* désigne un point de liaison avec l'élastomère E
E, qui peut être porté par la position ortho, méta, ou para de A par rapport au groupement comprenant la triple liaison carbone-carbone, désigne l'élastomère diénique, et
n est un nombre entier allant 1 à 12.

## Patentansprüche

1. Metallorganischer Initiator für die anionische Polymerisation der folgenden Formel 1: 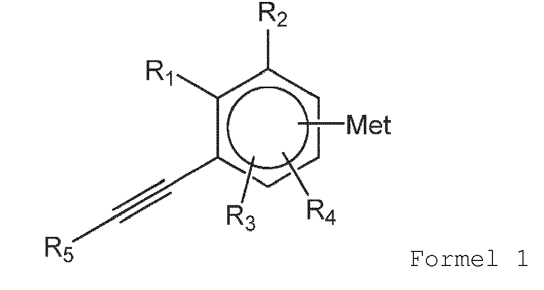 wobei
Met, das in ortho-, meta- oder para-Position stehen kann, für ein Alkalimetall, vorzugsweise Li, Na oder K, oder eine Stannyllithium-Gruppe SnLi steht und Met vorzugsweise für ein Lithiumatom steht und
R₁, R₂ sowie R₃ und R₄, die in ortho-, meta- oder para-Position stehen können, unabhängig voneinander für ein Wasserstoffatom, eine C₁-C₁₅-Alkyl-, C₅-C₁₅-Cycloalkyl-, C₆-C₁₆-Aryl- oder C₇-C₁₅-Arylalkylgruppe stehen, wobei diese Gruppen durch ein Heteroatom wie 0 oder S von dem aromatischen Kern getrennt sein können und R₁, R₂, R₃ und R₄ vorzugsweise jeweils für Wasserstoffatom stehen und
R₅ für eine C₁-C₁₅-Alkyl-, C₅-C₁₅-Cycloalkyl-, C₆-C₁₅-Aryl- oder C₇-C₁₅-Arylalkylgruppe oder eine Schutzgruppe für die Alkinfunktion steht, mit Ausnahme der Verbindungen 4-[2-(Trimethylsilyl)ethinyl]phenyllithium und 3-[2-(Trimethylsilyl)ethinyl]phenyllithium.

2. Initiator für die anionische Polymerisation nach Anspruch 1, **dadurch gekennzeichnet, dass** es sich um 2-[2-(Trimethylsilyl)ethinyl]phenyllithium der Formel (C) handelt:

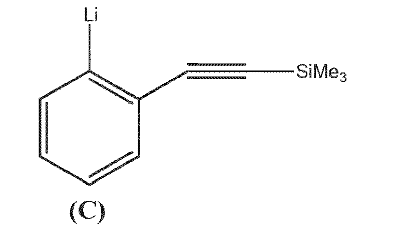

3. Verfahren zur Synthese eines Dienelastomers, das an einem oder jedem seiner Kettenenden eine Gruppe, die eine Alkinfunktion umfasst, trägt, **dadurch gekennzeichnet, dass** es die durch eine metallorganische Verbindung mit einer Alkinbindung der Formel 1: 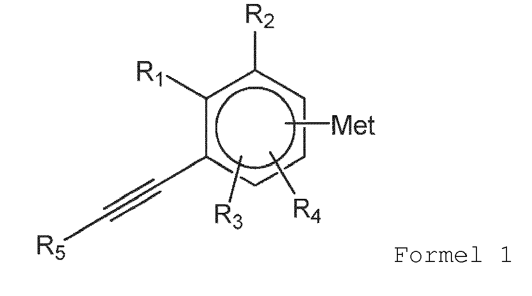 wobei
Met, das in ortho-, meta- oder para-Position bezüglich der die Kohlenstoff-Kohlenstoff-Dreifachbindung umfassenden Gruppe stehen kann, für ein Alkalimetall, vorzugsweise Li, Na oder K, oder eine Stannyllithium-Gruppe SnLi steht und Met vorzugsweise für ein Lithiumatom steht und
R₁, R₂ sowie R₃ und R₄, die in ortho-, meta- oder para-Position stehen können, unabhängig voneinander für ein Wasserstoffatom, eine C₁-C₁₅-Alkyl-, C₅-C₁₅-Cycloalkyl-, C₆-C₁₅-Aryl- oder C₇-C₁₅-Arylalkylgruppe stehen, wobei diese Gruppen durch ein Heteroatom wie 0 oder S von dem aromatischen Kern getrennt sein können und R₁, R₂, R₃ und R₄ vorzugsweise jeweils für Wasserstoffatom stehen und
R₅ für eine C₁-C₁₅-Alkyl-, C₅-C₁₅-Cycloalkyl-, C₆-C₁₅-Aryl- oder C₇-C₁₅-Arylalkylgruppe oder eine Schutzgruppe für die Alkinfunktion steht, initiierte anionische Polymerisation mindestens eines konjugierten Dienmonomers umfasst.

4. Verfahren zur Synthese eines Dienelastomers, das an einem oder jedem seiner Kettenenden eine Gruppe, die eine Alkinfunktion umfasst, trägt, nach Anspruch 3, **dadurch gekennzeichnet, dass** es die Funktionalisierung des Dienelastomers durch Reaktion des aus der Polymerisation resultierenden lebenden Dienelastomers mit einem Funktionalisierungs-, Kupplungs- oder Sternverzweigungsmittel umfasst.

5. Verfahren zur Synthese eines Dienelastomers, das an einem oder jedem seiner Kettenenden eine Gruppe, die eine Alkinfunktion umfasst, trägt, nach Anspruch 3 oder 4, **dadurch gekennzeichnet, dass** es die Entschützung der Alkinfunktion umfasst, wenn R₅ für eine Schutzgruppe für die Alkinfunktion steht.

6. Dienelastomer, das an einem oder jedem seiner Kettenenden eine Gruppe, die eine Alkinfunktion umfasst, trägt, entsprechend der folgenden Formel 3:
(A - E)ₙ - X Formel 3
wobei
X für eine n-wertige Kohlenwasserstoffgruppe oder eine Gruppe, die sich von einem Funktionalisierungs-, Kupplungs- oder Sternverzweigungsmittel mit mindestens einem aus 0, N, Si und Sn ausgewählten Atom ableitet, steht;
A für einen einwertigen Rest der folgenden Formel 2 steht: 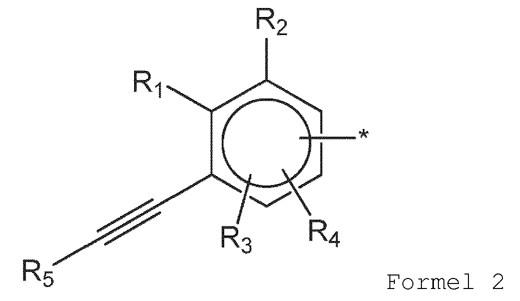 worin:
R₁, R₂ sowie R₃ und R₄, die in ortho-, meta- oder para-Position stehen können, unabhängig voneinander für ein Wasserstoffatom, eine C₁-C₁₅-Alkyl-, C₅-C₁₅-Cycloalkyl-, C₆-C₁₅-Aryl- oder C₇-C₁₅-Arylalkylgruppe stehen, wobei diese Gruppen durch ein Heteroatom wie 0 oder S von dem aromatischen Kern getrennt sein können und R₁, R₂, R₃ und R₄ vorzugsweise jeweils für Wasserstoffatom stehen und
R₅ für eine C₁-C₁₅-Alkyl-, C₅-C₁₅-Cycloalkyl-, C₆-C₁₅-Aryl- oder C₇-C₁₅-Arylalkylgruppe oder eine Schutzgruppe für die Alkinfunktion steht,
* für einen Verknüpfungspunkt mit dem Elastomer E steht,
E, das in ortho-, meta- oder para-Position von A bezüglich der die Kohlenstoff-Kohlenstoff-Dreifachbindung umfassenden Gruppe stehen kann, für ein Dienelastomer steht und
n für eine ganze Zahl im Bereich von 1 bis 12 steht.

## Claims

1. Anionic polymerization organometallic initiator of following formula 1: 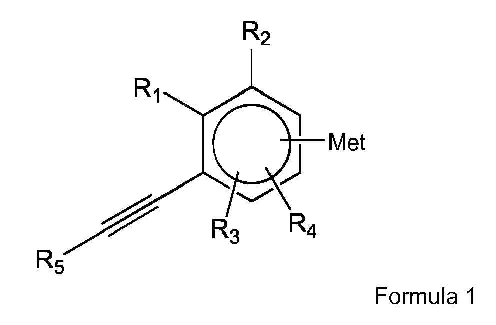 where:
Met, which can be borne by the ortho, meta or para position, denotes an alkali metal, preferably Li, Na or K, or a stannyllithium SnLi group; preferably, Met denotes a lithium atom, and
R₁ and R₂, and also R₃ and R₄, which can be borne by the ortho, meta or para position, denote, independently of one another, a hydrogen atom, a C₁-C₁₅ alkyl group, a C₅-C₁₅ cycloalkyl group, a C₆-C₁₅ aryl group or a C₇-C₁₅ arylalkyl group which can be separated from the aromatic nucleus by a heteroatom, such as O or S, and preferably R₁, R₂, R₃ and R₄ each denote a hydrogen atom, and
R₅ denotes a C₁-C₅ alkyl group, a C₅-C₁₅ cycloalkyl group, a C₆-C₁₅ aryl group, a C₇-C₁₅ arylalkyl group or a protective group for the alkyne functional group,
with the exception of the compounds 4-[2-(trimethylsilyl)ethynyl]phenyllithium and 3-[2-(trimethylsilyl)ethynyl]phenyllithium.

2. Anionic polymerization initiator according to Claim 1, **characterized in that** it is 2-[2-(trimethylsilyl)ethynyl]phenyllithium of formula (C):

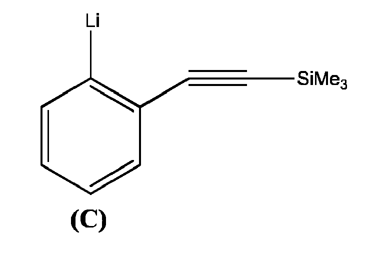

3. Process for the synthesis of a diene elastomer bearing, at one or each of its chain ends, a group comprising an alkyne functional group, **characterized in that** it comprises the anionic polymerization of at least one conjugated diene monomer initiated by an organometallic compound comprising an alkyne bond of formula 1: 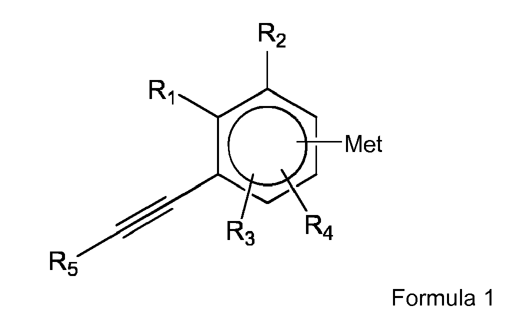 where:
Met, which can be borne by the ortho, meta or para position with respect to the group comprising the carbon-carbon triple bond, denotes an alkali metal, preferably Li, Na or K, or a stannyllithium SnLi group; preferably, Met denotes a lithium atom, and
R₁ and R₂, and also R₃ and R₄, which can be borne by the ortho, meta or para position, denote, independently of one another, a hydrogen atom, a C₁-C₁₅ alkyl group, a C₅-C₁₅ cycloalkyl group, a C₆-C₁₅ aryl group or a C₇-C₁₅ arylalkyl group which can be separated from the aromatic nucleus by a heteroatom, such as O or S, and preferably R₁, R₂, R₃ and R₄ each denote a hydrogen atom, and
R₅ denotes a C₁-C₅ alkyl group, a C₅-C₁₅ cycloalkyl group, a C₆-C₁₅ aryl group, a C₇-C₁₅ arylalkyl group or a protective group for the alkyne functional group.

4. Process for the synthesis of a diene elastomer bearing, at one or each of its chain ends, a group comprising an alkyne functional group according to Claim 3, **characterized in that** it comprises the functionalization of the diene elastomer by reaction of the living diene elastomer resulting from the polymerization with a functionalization, coupling or star-branching agent.

5. Process for the synthesis of a diene elastomer bearing, at one or each of its chain ends, a group comprising an alkyne functional group according to Claim 3 or 4, **characterized in that** it comprises the deprotection of the alkyne functional group when R₅ denotes a protective group for the alkyne functional group.

6. Diene elastomer bearing, at one or each of its chain ends, a group comprising an alkyne functional group, corresponding to the following formula 3:
(A - E)ₙ - X Formula 3
where:
X denotes a hydrocarbon group of valency n or a group resulting from a functionalization, coupling or star-branching agent comprising at least one atom chosen from O, N, Si or Sn;
A is a monovalent radical corresponding to the following formula 2: 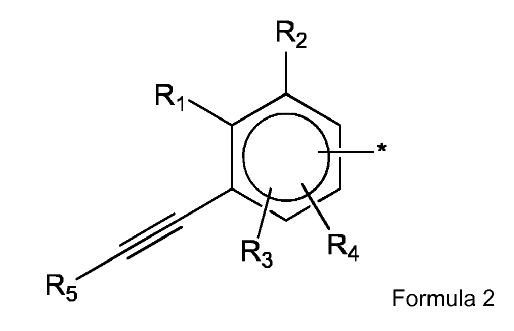 in which:
R₁ and R₂, and also R₃ and R₄, which can be borne by the ortho, meta or para position, denote, independently of one another, a hydrogen atom, a C₁-C₁₅ alkyl group, a C₅-C₁₅ cycloalkyl group, a C₆-C₁₅ aryl group or a C₇-C₁₅ arylalkyl group which can be separated from the aromatic nucleus by a heteroatom, such as O or S, and R₁, R₂, R₃ and R₄ each preferably denote a hydrogen atom,
R₅ denotes a hydrogen atom, a C₁-C₅ alkyl group, a cycloalkyl group, a C₆-C₁₅ aryl group, a C₇-C₁₅ arylalkyl group or a protective group for the alkyne functional group, and
* indicates a point of bonding with the elastomer E,
E, which can be borne by the ortho, meta or para position of A with respect to the group comprising the carbon-carbon triple bond, denotes the diene elastomer, and
n is an integer ranging from 1 to 12.
